# FASCICULE DE BREVET EUROPEEN

(11) **EP 2 294 809 B1**
(45) Date de publication et mention de la délivrance du brevet: **04.11.2015**
(21) Numéro de dépôt: 09766069.0
(22) Date de dépôt: 12.06.2009
(51) Int. Cl.: H04N 5/335

(54) **CAPTEUR D'IMAGE DU TYPE TDI A DYNAMIQUE AUTO ADAPTEE PAR POINT IMAGE**
BILDSENSOR DES TDI-TYPS MIT SELBSTANGEPASSTER DYNAMIK AUF DER BASIS DES BILDPUNKTS
IMAGE SENSOR OF THE TDI TYPE WITH SELF-ADAPTED DYNAMICS BASED ON IMAGE POINT

(30) Priorité: 17.06.2008 FR 0853981
(43) Date de publication de la demande: 16.03.2011
(73) Titulaire: Centre National d'Etudes Spatiales, 75039 Paris Cedex 01 (FR)
(72) Inventeur: PETIT, Sophie, F-31470 Fontenilles (FR); MATERNE, Alex, F-31320 Castanet Tolosan (FR); BERNARD, Frédéric, F-31120 Portet Sur Garonne (FR)
(74) Mandataire: Novagraaf Technologies
(86) Numéro de dépôt international: PCT/FR2009/051116
(87) Numéro de publication internationale: WO 2009/153507

(56) Documents cités:
- EP-A- 0 425 348
- WO-A-00/57633
- FR-A- 2 665 600
- US-A- 4 382 267
- US-B1- 6 906 749

## Description

L'invention concerne un capteur d'image du type TDI (pour Time Delay Integration en anglais, à décalage temporel et sur-intégration en français). La fonction TDI permet d'augmenter artificiellement le temps de pose d'un capteur d'image.

Un tel capteur est notamment intéressant pour toute application où l'image d'un objet est en mouvement relatif par rapport au capteur. L'objet peut être immobile et le capteur en mouvement : c'est le cas par exemple dans des applications d'imagerie par satellite, où un satellite en mouvement capture des images de la terre autour de laquelle il tourne, ou bien d'un scanner se déplaçant le long d'un objet immobile pour en prendre un image. Egalement, l'objet peut être en mouvement et le capteur immobile : c'est le cas par exemple pour la surveillance d'installations industrielles dans lesquelles un capteur immobile est utilisé pour surveiller la fabrication ou le traitement d'un produit au défilé.

Un capteur TDI est notamment décrit dans le document US 6,906,749. Il comprend une matrice de détection, comprenant M lignes de X colonnes de pixels photosensibles devant laquelle l'image à détecter défile. Ainsi, un point de l'image à détecter est détecté à des périodes de détection successives par les M pixels d'une même colonne de détection X. Après une période de détection d'un point de l'image par un pixel actif, le pixel fournit une tension électrique VI proportionnelle à l'éclairement EI du dit point.

Le capteur comprend également une matrice d'addition comprenant M lignes de X colonnes d'addition,
chaque colonne de la matrice d'addition étant associée à une colonne de détection de même rang de la matrice de détection.

Après chaque période de détection (ou période d'intégration), les colonnes de pixels sont déchargées dans les colonnes d'addition. Pour cela, les tensions électriques VI aux bornes des pixels de la matrice de pixels sont appliquées aux bornes des additionneurs appropriés de la matrice d'addition, de sorte que : soit un même additionneur d'une colonne de rang X de la matrice d'addition additionne successivement des tensions électriques VI en provenance des M pixels de la colonne de même rang X de la matrice de détection, les dites tensions électriques étant toutes proportionnelles à l'éclairement LI du même point de l'image à détecter, soit chaque additionneur additionne un pixel qui lui est dédié avec le résultat d'une addition précédente. La durée d'une phase d'addition est ajustée au temps nécessaire pour décharger M pixels d'une même colonne dans les additionneurs appropriés.

Un inconvénient des capteurs TDI connus est l'ajustement de leur dynamique à la dynamique en éclairement des scènes à observer.

Soit EI l'éclairement d'un point de l'image à détecter, et soit VI la tension aux bornes d'un pixel après la détection du dit point. Après M additions, la tension résultante aux bornes de l'additionneur est égale à M*VI et est proportionnelle à M*EI.

Une tension résultante efficace aux bornes d'un additionneur est comprise entre un seuil minimum DMIN et un seuil maximum DMAX.

Si, après M additions, la tension résultante aux bornes d'un additionneur est inférieure à DMIN, le signal correspondant au point lumineux est noyé dans le bruit. Ainsi, les points dont l'éclairement EI est inférieur à une valeur minimale EIMIN, correspondant à des tensions à additionner VI inférieures à DMIN/M, ne sont pas exploitables avec un bon rapport signal/bruit.

Inversement, si l'éclairement d'un point lumineux est supérieur à EIMAX, correspondant à des tensions à additionner VI supérieures à DMAX/M, alors l'additionneur sature et plafonne à la tension DMAX, avant la fin des M additions des tensions VI. Ainsi, deux points dont l'éclairement est supérieur à EIMAX ne sont pas différenciés l'un de l'autre.

La dynamique en éclairement du capteur, EIMAX-EIMIN, est ainsi proportionnelle à la dynamique électrique DMAX - DMIN de l'additionneur divisée par M. Le choix de M est donc un compromis entre une valeur forte de M permettant de détecter des points à faible éclairement et une valeur faible de M permettant de détecter correctement des points à fort éclairement.

Ainsi, les capteurs TDI ne sont pas performants pour traiter des images à forte dynamique d'éclairement, c'est-à-dire des images dans lesquelles la différence d'éclairement entre le point le moins éclairé et le point le plus éclairé est très importante. C'est le cas par exemple pour des images avec de grands contrastes (villes, parking, images du ciel, etc.) ou dans des zones assez sombres (prise de vue en fin ou début de journée, ...).

A noter que, dans certains capteurs, on soustrait les tensions enregistrées dans les pixels au contenu des additionneurs (ou on additionne des tensions négatives). Les commentaires ci-dessus s'appliquent également à de tels capteurs, simplement en inversant DMIN et DMAX.

Le document FR 2 665 600 décrit un capteur TDI qui cherche à résoudre ce problème en ajustant le nombre d'additions en fonction d'un éclairement moyen de l'ensemble de l'image.

Un but de l'invention est de proposer un capteur TDI permettant de traiter des images à forte dynamique d'éclairement, par adaptation du nombre d'additions pour chaque point au sol.

Pour cela, l'invention propose un capteur d'image du type « TDI » tel que défini dans la revendication 1.

Ainsi, avec l'invention, pour chaque additionneur, on adapte le nombre d'additions à effectuer en fonction de l'éclairement du point à détecter associé.

De préférence, pour un capteur matriciel, comprenant X colonnes de détection et X colonnes d'addition, on prévoit également un dispositif de transfert adapté pour ajuster, pour chaque additionneur de chaque colonne d'addition, le nombre d'additions à réaliser. On obtient ainsi une adaptation optimale, qui permet de détecter avec précision des images à très forte dynamique d'éclairement.

L'invention sera mieux comprise et d'autres caractéristiques et avantages apparaîtront à la lecture de la description qui va suivre, d'exemples de mise en oeuvre d'un capteur selon l'invention. La description est à lire en relation aux dessins annexés dans lesquels :
- la figure 1 est un schéma de principe d'un capteur TDI,
- la figure 2 détaille une partie du schéma de principe de la figure 1,
- la figure 3 détaille une partie du schéma de la figure 2,
- les figures 4A et 5A sont des organigrammes illustrant de façon partielle et simplifiée le fonctionnement de modes de réalisation de l'invention ; et
- les figures 4B et 5B sont des organigrammes illustrant de façon plus complète les modes de réalisation respectivement décrits en référence aux figures 4A et 5A.

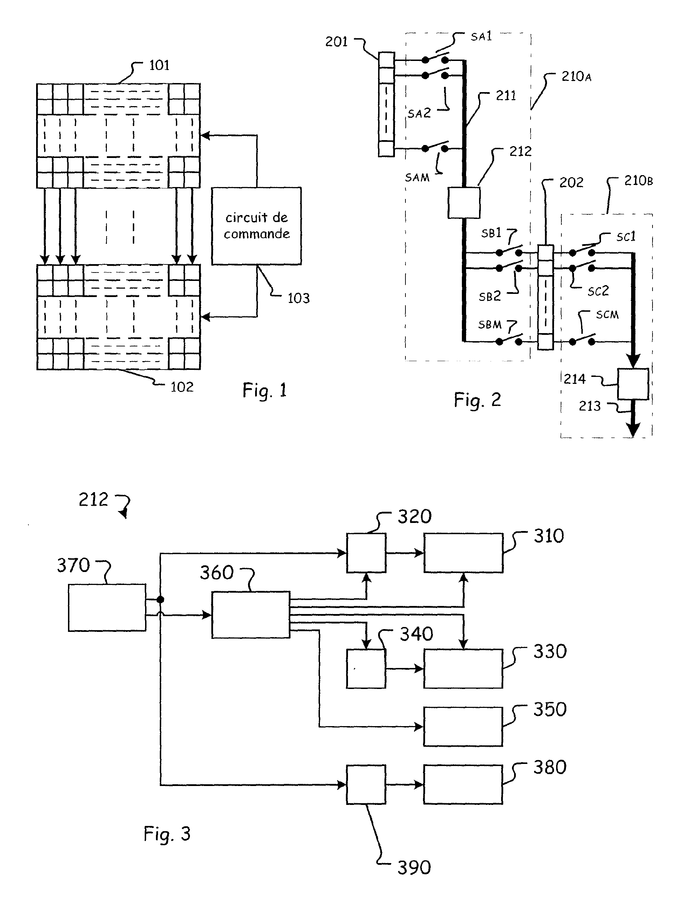

Dans l'exemple représenté figure 1, le capteur TDI comprend une matrice de détection 101 comprenant M lignes de X colonnes de pixels photosensibles, et une matrice d'addition 102 comprenant M lignes de X colonnes d'addition. A chaque colonne de la matrice de détection est associée une colonne de la matrice d'addition. Le nombre de lignes de la matrice de détection pourrait être différent du nombre de lignes de la matrice d'addition. Le capteur comprend également un circuit de commande 103 approprié pour gérer les transferts de tensions électriques entre la matrice de détection et la matrice d'addition d'une part, et entre la matrice d'addition et la sortie du capteur d'autre part.

Lorsque l'image à détecter défile devant le capteur, les points de la première ligne de l'image sont d'abord détectés par les pixels de la première ligne de la matrice de détection, puis par les pixels de la deuxième ligne de la matrice de détection, etc. Les points de la deuxième ligne de l'image à détecter sont détectés par les pixels de la première ligne de la matrice de détection lorsque les points de la première ligne de l'image sont détectés par les pixels de la deuxième ligne de la matrice de détection. Les points de la troisième ligne de l'image à détecter sont détectés par les pixels de la première ligne de pixels de la matrice de détection lorsque les points de la deuxième ligne de l'image sont détectés par les pixels de la deuxième ligne de pixels de la matrice de détection et lorsque les points de la première ligne de l'image sont détectés par les pixels de la troisième ligne de pixels de la matrice de détection, etc.

A la fin d'une période de détection, les tensions électriques aux bornes des pixels de la matrice de pixels sont proportionnelles à l'éclairement des points de l'image qu'ils détectent. Le contenu de tous les pixels est ensuite déchargé ou ajouté de manière appropriée dans les additionneurs de la matrice d'addition. La période de détection ou d'enregistrement dans les pixels de la matrice de pixels est choisie bien inférieure à l'inverse de la vitesse de défilement de l'image à détecter devant le capteur.

Sur la figure 2 est représentée une colonne 201 de la matrice de détection 101, une colonne 202 de la matrice d'addition 102 et un dispositif de transfert 103. La colonne 201 comprend M pixels P1 à PM et la colonne 202 comprend M additionneurs A1 à AM. En dupliquant le schéma de la figure 2 par N, on obtient un schéma de principe d'un capteur TDI à N colonnes.

Sur la figure 2 est également représenté un dispositif de transfert 210 (deux parties 210a, 210b), comprenant :
- un bus de transfert 211,
- une première série d'interrupteurs SA1 à SAM ; chaque interrupteur SA1 à SAM est relié entre une sortie d'un pixel P1 à PM de la colonne de détection 201 et le bus de transfert 211,
- une deuxième série d'interrupteurs SB1 à SBM ; chaque interrupteur SB1 à SBM est relié entre le bus de transfert et un additionneur A1 à AM de la colonne d'addition 202, et
- un dispositif de commande d'addition 212, pour commander les interrupteurs SA1 à SAM et SB1 à SBM de manière appropriée,
- un bus de sortie 213,
- une troisième série d'interrupteurs SC1 à SCM ; chaque interrupteur SC1 à SCM est relié entre la sortie d'un additionneur A1 à AM et le bus de sortie 213 et
- un dispositif de commande de sortie 214, pour commander les interrupteurs SC1 à SCM de manière approprié pour transférer à chaque période le contenu d'un additionneur de rang k sur le bus de sortie.

Le dispositif 212 comprend notamment (figure 3) :
- un premier circuit de commande d'interrupteurs 310 adapté pour commander les interrupteurs SA1 à SAM de la première série d'interrupteurs de sorte à relier un pixel Pi de rang i de la colonne de détection 201 au bus de transfert 211 et à isoler les autres pixels, de rang différent de i, de la colonne de détection 201 du bus de transfert 211,
- un premier circuit de commande d'incrémentation 320 adapté pour incrémenter le rang i du pixel Pi de la colonne de détection 201 à relier au bus de transfert 211,
- un deuxième circuit de commande d'interrupteurs 330 adapté pour commander les interrupteurs SB1 à SBM de la deuxième série d'interrupteurs de sorte à relier le bus de transfert 211 à un additionneur Aj de rang j de la colonne d'addition 202 et à isoler le bus de transfert 211 des autres additionneurs de la colonne d'addition 202,
- un deuxième circuit de commande d'incrémentation 340 adapté pour incrémenter le rang j de l'additionneur relié au bus de transfert,
- un circuit d'ajustement 350, pour inhiber le fonctionnement du deuxième circuit de commande d'interrupteurs 330 si, pour l'additionneur de rang j, le nombre d'additions à réaliser est atteint,
- un premier circuit de commande de répétition 360 adapté pour activer répétitivement le premier circuit de commande d'interrupteurs 310, le deuxième circuit de commande d'interrupteurs 330, le circuit d'ajustement 350, le premier circuit de commande d'incrémentation 320 et le deuxième circuit de commande d'incrémentation 340,
- un deuxième circuit de commande de répétition 370 adapté pour activer répétitivement le premier circuit d'incrémentation 320, puis activer le premier circuit de commande de répétition 360 chaque fois que le deuxième circuit de commande 360 de répétition est activé.

Le circuit de commande de sortie 214 comprend :
- un troisième circuit de commande d'interrupteurs 380 adapté pour commander les interrupteurs SC1 à SCM de la troisième série d'interrupteurs de sorte à relier un additionneur Ak de rang k de la colonne d'addition 202 au bus de sortie 213 et à isoler les autres additionneurs, de rang différent de k, du bus de sortie 213,
- un troisième circuit de commande de décrémentation 390 adapté pour décrémenter le rang k de l'additionneur Ak à relier au bus de sortie 213.

Le troisième circuit de commande de décrémentation 390 et le troisième circuit de commande d'interrupteur 380 sont activés répétitivement par le deuxième circuit de commande de répétition 370, avant l'activation du premier circuit de commande de répétition 360.

En commandant la fermeture d'un unique interrupteur SAi de rang i de la première série d'interrupteurs et la fermeture d'un unique interrupteur SBj de la deuxième série d'interrupteurs, les circuits de commande d'interrupteurs 310, 330 autorisent l'addition des charges électriques mémorisées dans le pixel de rang i au contenu de l'additionneur de rang j.

En commandant l'incrémentation des indices i et j, les circuits de commande d'incrémentation 320, 340 permettent de sélectionner un pixel suivant dans la colonne 201 et un additionneur suivant dans la colonne d'addition 202, pour effectuer un transfert suivant de tension électrique.

Le premier circuit de commande de répétition 360 permet d'additionner successivement les tensions électriques mémorisées dans des pixels successifs dans les additionneurs successifs appropriés, ou, en d'autres termes, de décharger tous les pixels de la colonne de détection dans les additionneurs de rangs appropriés.

Le deuxième circuit de commande de répétition 370 permet de décaler de un l'indice i par rapport à l'indice j avant d'activer le premier circuit de commande de répétition. Le décalage de un est effectué à chaque décalage d'une ligne de l'image à détecter d'une ligne de détection du capteur à la ligne de détection suivante. Ceci permet de stocker dans un même additionneur toutes les tensions électriques correspondant au même point de l'image à détecter (effet TDI), au fur et à mesure que ce point est détecté par les pixels successifs d'une même colonne.

A un instant donné, la valeur des indices i, j indique quel pixel Pi est déchargé dans l'additionneur Aj par l'intermédiaire du bus de transfert. La valeur de l'indice i indique également le nombre d'additions de charges électriques déjà réalisées dans l'additionneur de rang j. En effet, comme dit précédemment, un point I de l'image à détecter est détecté d'abord par le pixel P1, puis par le pixel P2, ... puis par le pixel Pi, ... puis par le pixel PM et dans l'additionneur Aj associé au point à détecter, on additionne les tensions électriques mémorisées par le pixel P1 lorsque P1 détecte le point I, puis les tensions électriques mémorisées par le pixel P2 lorsque P2 détecte le point I, ..., puis les tensions électriques mémorisées par le pixel Pi lorsque Pi détecte le point I.

Le dispositif d'ajustement 350 est spécifique à l'invention. Il permet d'ajuster à une valeur inférieure à M, et ce indépendamment pour chaque colonne, le nombre d'additions de tensions électriques réalisées pour un additionneur donné, en fonction de l'éclairement du point correspondant de l'image à détecter. Pour les points à détecter dont l'éclairement est très faible, on choisira de préférence un nombre d'additions à réaliser égal ou proche de M. Au contraire, pour des points à détecter dont l'éclairement est assez élevée, on choisira un nombre d'additions à réaliser égal ou proche de 1. Le dispositif d'ajustement permet ainsi d'adapter la dynamique du capteur point par point en fonction de l'éclairement de chaque point de l'image à détecter.

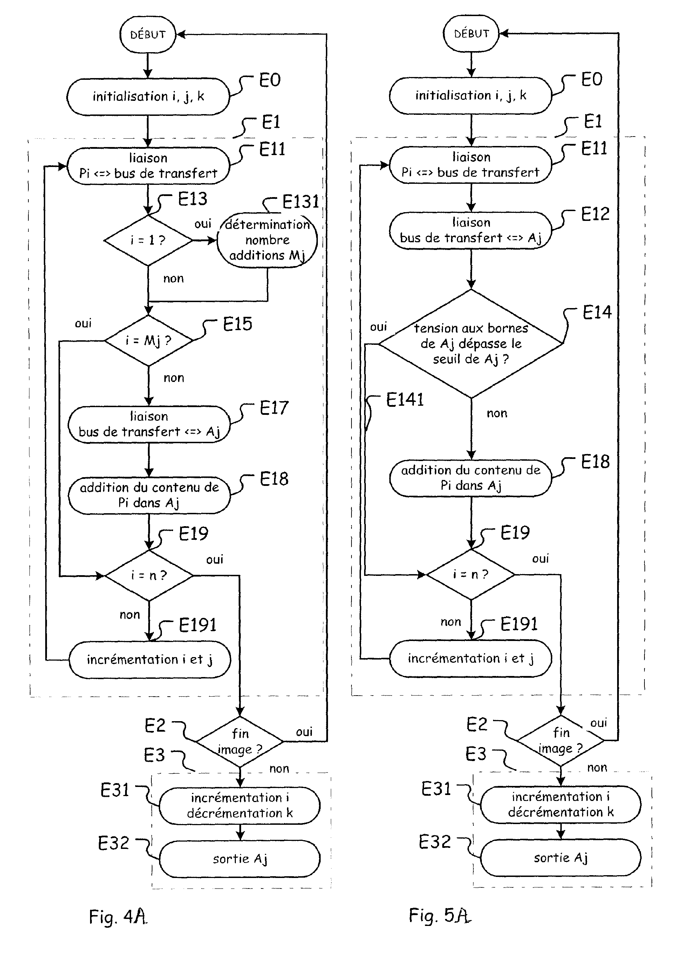

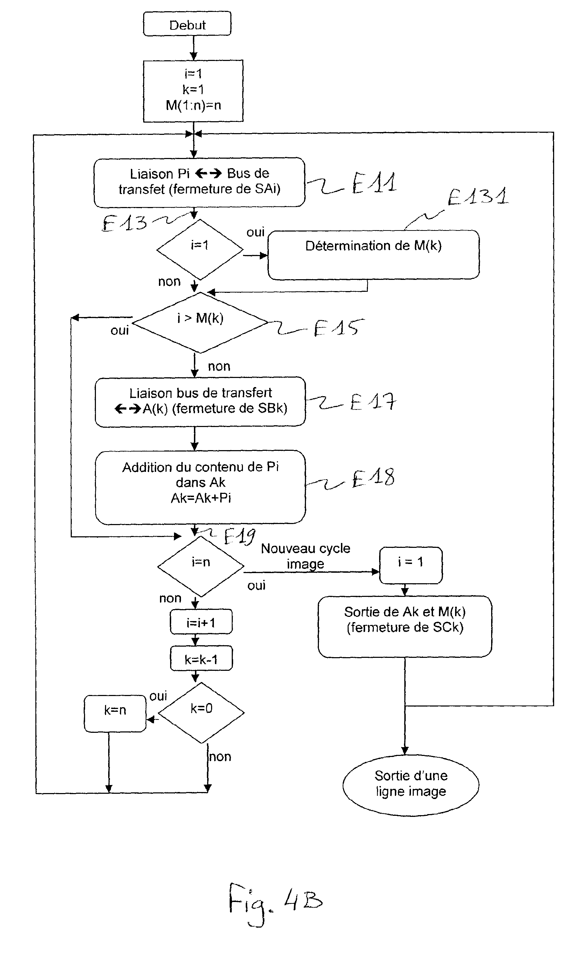

Les circuits 320, 340 et 390 d'une part, et les circuits 310, 330, 380 d'autre part peuvent être réalisés selon le mode de réalisation décrit sur la figure 4 de US 6 906 749:
- les circuits de commande d'interrupteurs sont des registres à décalage de M bits dont une sortie série est rebouclée sur une entrée série, le registre contenant un unique bit à un et M - 1 bits à zéro,
- les circuits de commande d'incrémentation 320, 340 et 390 sont des portes logiques permettant de synchroniser les signaux de commande produits par le premier circuit de commande de répétition 360 sur un signal d'horloge.

Les circuits 320, 340 de commande d'incrémentation et le circuit de commande de décrémentation 390 peuvent aussi être réalisés par des compteurs susceptibles de produire des nombres compris entre 1 et M, par pas de un, chaque fois qu'ils sont activés par le circuit 360 ou le circuit 370. Une activation supplémentaire du compteur après la fourniture du nombre M ramène le compteur à 1. Le fonctionnement des compteurs est de préférence cadencé par un signal d'horloge pour synchroniser le fonctionnement de tous les compteurs. Les circuits 310, 330, 380 de commande d'interrupteurs sont alors des circuits de décodage réalisés par un assemblage approprié de portes logiques et adaptés pour produire M signaux de commande tels que :
- un des signaux, correspondant au nombre fourni par le compteur associé, est actif pour commander la fermeture des interrupteurs de la série
- les autres signaux sont inactifs pour maintenir ouverts les autres interrupteurs de la série.

Selon une première variante, le dispositif d'ajustement 350 comprend :
- un moyen pour déterminer successivement, pour les additionneurs successifs de la colonne d'addition, le nombre d'additions à réaliser à partir des tensions électriques mémorisées successivement par le premier pixel de la colonne de détection et du seuil de l'additionneur correspondant, et
- un moyen d'arrêt pour empêcher, pour chaque additionneur de la colonne d'addition, la réalisation d'une addition supplémentaire lorsque le nombre d'additions à réaliser est atteint pour le dit l'additionneur.

Le moyen de détermination comprend par exemple un circuit de calcul, dont une entrée de données est reliée au bus de transfert et dont une entrée d'activation est reliée à l'entrée de commande du premier interrupteur SA1 de la première série d'interrupteurs. Lorsqu'il est activé, c'est-à-dire lorsque le premier interrupteur SA1 est fermé (i = 1), le circuit de calcul détermine un nombre Mj d'additions à réaliser dans l'additionneur de rang j de la colonne d'addition, à partir de la tension électrique présente sur le bus de transfert et du seuil de l'additionneur de rang j de la colonne d'addition. Le circuit de détermination comprend également un moyen pour mémoriser les nombres M1, ..., Mj, ... MM au fur et à mesure qu'ils sont calculés, un nombre étant calculé à chaque fermeture de l'interrupteur SA1.

Selon une variante, le moyen d'arrêt comprend un comparateur, adapté pour comparer l'indice i avec le nombre Mj associé à l'additionneur de rang j, et un interrupteur principal, relié entre deux portions du bus de transfert et adapté pour :
- ouvrir l'interrupteur principal pour isoler tous les interrupteurs SB1 à SBM du bus de transfert si l'indice i est supérieur à Mj, et
- fermer l'interrupteur principal pour autoriser le transfert de tension entre le pixel de rang i et l'additionneur de rang j si i est inférieure à Mj.

Selon une autre variante, le moyen d'arrêt comprend un comparateur, adapté pour comparer l'indice i avec le nombre Mj associé à l'additionneur de rang j, et un interrupteur principal, relié entre le deuxième circuit de commande d'interrupteurs 330 et la deuxième série d'interrupteurs SB1 à SBM et adapté pour inhiber tous les signaux de commande produits par le deuxième circuit de commande d'interrupteurs 330 si l'indice i est supérieur à Mj.

Sur la figure 4A est représenté de façon schématique et partielle un exemple de fonctionnement du dispositif de transfert 350 lorsqu'il est réalisé selon la première variante décrite ci-dessus.

Lors d'une étape d'initialisation E0, les indices i et j sont initialisés, par exemple à 1.

Une étape E1 d'addition du contenu de la colonne de détection dans la colonne d'addition est ensuite réalisée. L'étape E1 est mise en oeuvre en activant le premier circuit de commande de répétition 360.

Lors d'une étape E2 suivante, on détermine si toutes les lignes de l'image ont été détectées.

Si le résultat de l'étape E2 est négatif (toutes les lignes de l'image n'ont pas encore été détectées), alors une étape E3 de décalage et de sortie du contenu d'un additionneur est réalisée puis l'étape E1 est répétée. L'étape E3 et l'étape E1 suivante sont mises en oeuvre en activant le deuxième circuit de commande de répétition 370.

Si le résultat de l'étape E2 est positif (toutes les lignes de l'image ont été détectées), le procédé est arrêté.

L'étape E1 comprend les sous-étapes suivantes :
E11 : fermeture de l'interrupteur SAi de rang i de la première série d'interrupteurs, pour relier le pixel de rang i au bus de transfert,
E13 : comparaison du rang i avec la valeur "1" et :
   E131 : si i = 1, détermination du nombre Mj de sommations à effectuer dans l'additionneur j,
E15 : comparaison du rang i avec Mj et
   E151 : si i = Mj, aller directement à l'étape E19
E17 : fermeture de l'interrupteur SBj de rang j de la deuxième série d'interrupteurs, pour relier le bus de transfert à l'additionneur Aj,
E18 : addition, dans l'additionneur Aj, de la tension électrique mémorisée par le pixel Pi
E19 : comparaison du rang i avec la valeur M correspondant à la fin de la colonne de pixels et,
   si i est inférieur à M, E191 : incrémentation des indices i, j, et réalisation d'une nouvelle étape E1
   si i est égal à M, réalisation de l'étape E2.

L'étape E3 est exécutée après chaque transfert complet (i = M) des tensions électriques mémorisées dans la colonne de détection vers la colonne d'addition. L'étape E3 comprend les sous-étapes suivantes :
E31 : incrémentation de l'indice i et décrémentation de l'indice k
E32 : fermeture de l'interrupteur SCk de rang k, pour relier l'additionneur de rang k au bus de sortie.

La fermeture de l'interrupteur SCk permet de transmettre vers l'extérieur l'information accumulée dans l'additionneur Ak et correspondant à un point de l'image détectée.

De préférence, lors de l'étape E32, on transfère également vers une sortie du capteur le nombre Mk correspondant au nombre d'additions de tensions électriques effectuées dans l'additionneur Ak.

La figure 4B illustre de façon plus fidèle la mise en oeuvre de la première variante décrite ci-dessus, cette figure illustrant, en plus des étapes déjà mentionnées, le rebouclage vers l'étape E11 après la sortie d'une ligne image.

Selon une deuxième variante, le dispositif d'ajustement 350 comprend :
- un moyen pour déterminer, après la réalisation d'une addition, si la tension électrique résultante aux bornes d'un additionneur de la colonne d'addition dépasse le seuil du dit additionneur, et
- un moyen d'arrêt pour empêcher, pour chaque additionneur de la colonne d'addition, la réalisation d'une addition supplémentaire si la tension électrique résultante aux bornes dudit additionneur dépasse le seuil du dit additionneur.

Ainsi, dans cette variante, on ne calcule pas réellement le nombre d'additions à réaliser, on regarde simplement la tension résultante aux bornes d'un additionneur et on arrête lorsque la tension résultante atteint le seuil, c'est-à-dire lorsqu'elle devient supérieure au seuil maximum ou lorsqu'elle devient inférieure au seuil minimum du capteur, selon le type de capteur.

Le moyen de détermination comprend par exemple M comparateurs, chaque comparateur de rang j comprenant :
- une entrée de données reliée à la sortie d'un des M additionneurs de la colonne d'addition,
- une entrée de référence sur laquelle est appliqué un signal de référence représentatif du seuil de l'additionneur auquel le comparateur est associé,
- une entrée de commande reliée à l'entrée de commande de l'interrupteur SBj associé à l'additionneur Aj

Le moyen d'arrêt comprend par exemple un interrupteur principal, relié entre deux portions du bus de transfert, pour isoler l'interrupteur SBj si la tension électrique de l'additionneur Aj a atteint son seuil.

Sur la figure 5A est représenté de façon schématique et partielle un exemple de procédé de fonctionnement du dispositif de transfert lorsqu'il est réalisé selon la variante décrite ci-dessus.

Les étapes E0, E2, E3 sont identiques sur la figure 4A et sur la figure 5A, et sont exécutées dans les mêmes conditions. L'étape E1 est un peu différente. Elle comprend les sous-étapes suivantes :
E11 : fermeture de l'interrupteur SAi de rang i de la première série d'interrupteurs, pour relier le pixel de rang i au bus de transfert,
E12 : fermeture de l'interrupteur SBj de rang j de la deuxième série d'interrupteurs, pour relier le bus de transfert à l'additionneur Aj,
E14 : comparaison de la tension aux bornes de l'additionneur de rang j avec le seuil et :
   si la tension aux bornes de l'additionneur de rang j dépasse le seuil, réaliser l'étape E141 : aller directement à l'étape E19
E18 : addition, dans l'additionneur Aj, de la tension électrique aux bornes du pixel Pi
E19 : comparaison du rang i avec la valeur M correspondant à la fin de la colonne de pixels et,
   si i est inférieur à M, E191 : incrémentation des indices i, j, et réalisation d'une nouvelle étape E1
   si i est égal à M, réalisation de l'étape E2.

De préférence, dans le cadre de l'invention, lorsque, lors de l'étape E14, on détecte pour la première fois que l'additionneur de rang j est saturé (ie que la tension électrique aux bornes de l'additionneur dépasse le seuil), on mémorise la valeur de l'indice i.

Puis, lors de l'étape E32, on transfère également vers une sortie du capteur le nombre Mk correspondant au nombre d'additions de tensions électriques effectuées dans l'additionneur Ak.

On notera que dans les exemples décrits ci-dessus :
- les indices i et j sont incrémentés à chaque étape E191 ; ceci permet, au cours des M étapes E1 successives, de décaler simultanément l'indice associé à la colonne de détection et l'indice associé à la colonne d'addition, afin de décharger complètement le contenu de la colonne de détection ;
- l'indice i est incrémenté lors de l'étape E31 ; ceci permet de décaler de un l'indice de la colonne de détection par rapport à l'indice de la colonne d'addition pour obtenir l'effet TDI au fur et à mesure du défilement de l'image à détecter devant le capteur.

Par contre, l'indice k est décrémenté à chaque réalisation de l'étape E31.

En effet, Lorsque l'image à détecter défile devant le capteur :
- d'abord un point I1 de la 1ère ligne de l'image passe devant le pixel P1 d'une colonne de détection
- puis le point I1 passe devant le pixel P2 de la colonne de détection et le point 12 de la 2ème ligne de l'image passe devant le pixel P1 de la colonne de détection,
- puis le point I1 passe devant le pixel P3, le point I2 devant le pixel P2 et le point 13 de la 3ème ligne de l'image passe devant le pixel P1,
- etc.

En terme de procédé :
- au cours des M-1 premières réalisations de l'étape E1 (étapes E11 à E191), on transfère P1 dans A1, puis P2 dans A2, puis Pi dans Aj avec i = j ... puis Pn-1 dans An-1. i et j sont incrémentés simultanément à chaque étape E1 ; au cours de l'étape E1 suivante (étapes E11 à E19), on transfère Pn dans An (i = j = n); ensuite (fin de la colonne de détection mais pas fin de trame, étape E19 puis E2 puis E3) on incrémente i (étape E31) mais pas j ; donc i = 1 et j = n
- au cours des M-1 réalisations suivantes de l'étape E1, (étapes E11 à E191), on transfère P1 dans An, puis P2 dans A1, puis Pi dans Aj avec i = j+1 ... puis Pn-1 dans An-2. i et j sont incrémentés simultanément à chaque étape E1 ; au cours de l'étape E1 suivante (étapes E11 à E19), on transfère Pn dans An-1 ; ensuite (fin de la colonne de détection mais pas fin de trame, étape E19 puis E2 puis E3) on incrémente i (étape E31) mais pas j ; donc i = 1 et j = n-2 ;
- au cours des M-1 réalisations suivantes de l'étape E1, (étapes E11 à E191), on transfère P1 dans An-1, puis P2 dans An-1, puis Pi dans Aj avec i = j+2 ... puis Pn-1 dans An-3. i et j sont incrémentés simultanément à chaque étape E1 ; au cours de l'étape E1 suivante (étapes E11 à E19), on transfère Pn dans An-2 ; ensuite (fin de la colonne de détection mais pas fin de trame, étape E19 puis E2 puis E3) on incrémente i (étape E31) mais pas j ; donc i = 1 et j = n-3 ; etc.

Ainsi, on accumule :
- dans l'additionneur A1, l'image du point I1,
- dans l'additionneur An, l'image du point 12
- dans l'additionneur An-1, l'image du point 13,
- etc.

Lors des étapes E32, on doit alors sortir d'abord le contenu de l'additionneur A1, puis le contenu de l'additionneur An, puis le contenu de l'additionneur An-1, etc. D'où la nécessité de décrémenter l'indice k.

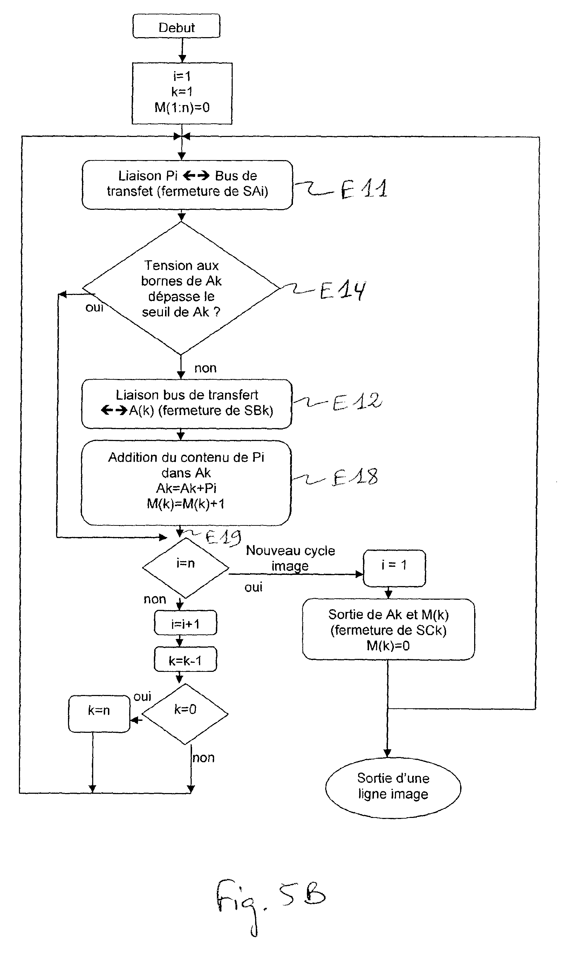

La figure 5B illustre de façon plus fidèle la mise en oeuvre de la deuxième variante décrite ci-dessus, cette figure illustrant, en plus des étapes déjà mentionnées, le rebouclage vers l'étape E11 après la sortie d'une ligne image.

Egalement, dans le cadre de l'invention, lorsque le contenu d'un additionneur est transféré sur le bus de sortie, il est essentiel de transférer également vers la sortie le nombre d'additions effectuées dans l'additionneur en question. Le transfert du nombre d'additions associé peut se faire en parallèle sur un autre bus de sortie par exemple. Le contenu de l'additionneur et le nombre correspondant d'additions effectuées permettent d'avoir une indication précise de la luminance du point détecté correspondant.

Egalement, comme on vient de le voir, dans le cadre de l'invention, pour chaque additionneur de la colonne d'addition, on adapte le nombre d'additions à effectuer.

Dans le cas d'un capteur matriciel, comprenant N colonnes tel que décrit sur la figure 1, on adapte le nombre d'additions à effectuer pour chaque additionneur de chaque colonne d'addition de la matrice d'addition. On obtient ainsi une adaptation optimale, qui permet de détecter avec précision des images à très forte dynamique d'éclairement.

Selon un mode de réalisation, pour adapter le nombre d'additions à effectuer pour chaque additionneur de chaque colonne d'additionneur, on peut dupliquer N fois le dispositif de transfert décrit pour une colonne.

Selon une troisième variante, le dispositif d'ajustement 350 comprend un comparateur Cj en sortie de chaque additionneur Aj ; le comparateur Cj inhibe l'entrée SBj si la tension est égale ou dépasse le seuil de l'additionneur. Cette variante est plus précise sur l'estimation du nombre Mk d'additions nécessaire que dans le cas d'une définition de Mk à partir du premier signal issu de SA1.

## Revendications

1. Capteur d'image du type TDI comprenant
• N colonnes de détection formant une matrice de détection, chaque colonne de détection comportant M pixels (Pi) photosensibles, une image à détecter défilant devant la matrice de détection de sorte qu'un point (Iz) de l'image à détecter est détecté à des périodes de temps successives par les M pixels d'une colonne de détection,
• N colonnes d'addition formant une matrice d'addition, chaque colonne d'addition comprenant M additionneurs (Aj), et
• N dispositifs de transfert, chaque dispositif de transfert étant adapté pour réaliser, à des périodes successives, des additions des tensions électriques mémorisées par des pixels successifs d'une desdites colonnes de détection correspondant au même point (Iz) de l'image à détecter dans un même additionneur(Aj) d'une desdites colonnes d'addition associée à ladite colonne de détection,
les dites tensions électriques étant toutes proportionnelles à l`éclairement du même point (Iz) de l'image à détecter,
ce capteur étant **caractérisé en ce que** chaque dispositif de transfert comprend un moyen pour ajuster, pour chaque point (Iz) de l'image à détecter, et donc pour chaque additionneur (Aj) de la colonne d'addition correspondant, le nombre d'additions à réaliser en fonction de l'éclairement du point (Iz) correspondant de l'image à détecter et
en fonction d'un seuil du dit additionneur (Aj), ledit ajustement étant réalisé point par point.

2. Capteur selon la revendication 1, dans lequel chaque moyen d'ajustement comprend :
• un moyen pour déterminer successivement, pour les additionneurs successifs de la colonne d'addition, le nombre (Mj) d'additions à réaliser à partir de la tension électrique mémorisée successivement par le premier pixel (P1) de la colonne de détection et du seuil de l'additionneur correspondant (Aj), et
• un moyen d'arrêt pour empêcher, pour chaque additionneur de la colonne d'addition, la réalisation d'une addition supplémentaire lorsque le nombre d'additions à réaliser est atteint pour le dit l'additionneur.

3. Capteur selon la revendication 2, dans lequel chaque moyen d'ajustement comprend également un moyen pour mémoriser, pour chaque additionneur de la colonne d'addition, le nombre d'additions à réaliser.

4. Capteur selon l'une des revendications 2 ou 3, comprenant également un moyen pout transmettre le nombre d'additions à réaliser vers une sortie du capteur.

5. Capteur selon la revendication 1, dans lequel chaque moyen d'ajustement comprend :
• un moyen pour déterminer, après la réalisation d'une addition, si la tension électrique aux bornes d'un additionneur (Aj) de la colonne d'addition dépasse le seuil du dit additionneur (Aj) et
• un moyen d'arrêt pour empêcher, pour chaque additionneur de la colonne d'addition, la réalisation d'une addition supplémentaire si la tension électrique aux bornes dudit additionneur dépasse le seuil du dit additionneur.

6. Capteur selon la revendication 5, comprenant également un moyen pour mémoriser le nombre d'additions réalisées dans un additionneur de la colonne d'addition.

7. Capteur selon l'une des revendications précédentes, dans lequel chaque dispositif de transfert comprend :
• un bus de transfert (211),
• une première série d'interrupteurs (SA1 à SAM), chaque interrupteur de la première série d'interrupteurs étant relié entre une sortie d'un pixel de la colonne de détection et le bus de transfert,
• un premier circuit de commande d'interrupteurs (310) adapté pour commander les interrupteurs de la première série d'interrupteurs de sorte à relier un pixel de rang i de la colonne de pixels au bus de transfert et à isoler les autres pixels de la colonne de pixels du bus de transfert,
• un premier circuit de commande d'incrémentation (320) adapté pour incrémenter le rang i du pixel de la colonne de pixel à relier au bus de transfert,
• une deuxième série d'interrupteurs (SB1 à SBM), chaque interrupteur de la deuxième série d'interrupteurs étant relié entre le bus de transfert et un additionneur de la colonne d'addition,
• un deuxième circuit de commande d'interrupteurs (330) adapté pour commander les interrupteurs de la deuxième série d'interrupteurs de sorte à relier le bus de transfert à un additionneur de rang j de la colonne d'addition et à isoler le bus de transfert des autres additionneurs de la colonne d'addition,
• un deuxième circuit de commande d'incrémentation (340) adapté pour incrémenter le rang j de l'additionneur relié au bus de transfert,
• un circuit d'ajustement (350), pour inhiber le fonctionnement du deuxième circuit de commande d'interrupteurs (330) si, pour l'additionneur de rang j, le nombre d'additions à réaliser est atteint,
• un premier circuit de commande de répétition (360) adapté pour activer répétitivement le premier circuit de commande d'interrupteurs, le deuxième circuit de commande d'interrupteurs, le circuit d'ajustement, le premier circuit de commande d'incrémentation et le deuxième circuit de commande d'incrémentation,
• un deuxième circuit de commande de répétition (370) adapté pour activer répétitivement le premier circuit d'incrémentation, puis activer le premier circuit de commande de répétition chaque fois que le deuxième circuit de commande de répétition est activé.

## Patentansprüche

1. Bildsensor vom Typ TDI, der enthält
• N Erfassungsspalten, die eine Erfassungsmatrix formen, wobei jede Erfassungsspalte M lichtempfindliche Pixel (Pi) aufweist, wobei ein zu erfassendes Bild vor der Erfassungsmatrix derart vorbeiläuft, dass ein Punkt (Iz) des zu erfassenden Bilds in aufeinanderfolgenden Zeitperioden von den M Pixeln einer Erfassungsspalte erfasst wird,
• N Additionsspalten, die eine Additionsmatrix formen, wobei jede Additionsspalte M Addierglieder (Aj) enthält, und
• N Übertragungsvorrichtungen, wobei jede Übertragungsvorrichtung geeignet ist, in aufeinanderfolgenden Zeiträumen Additionen der durch aufeinanderfolgende Pixel einer der Erfassungsspalten entsprechend dem gleichen Punkt (Iz) des zu erfassenden Bilds gespeicherten elektrischen Spannungen in einem gleichen Addierglied (Aj) einer der Additionsspalten durchzuführen, die der Erfassungsspalte zugeordnet ist, wobei die elektrischen Spannungen alle zur Beleuchtung des gleichen Punkts (Iz) des zu erfassenden Bilds proportional sind,
wobei dieser Sensor **dadurch gekennzeichnet ist, dass** jede Übertragungsvorrichtung eine Einrichtung enthält, um für jeden Punkt (Iz) des zu erfassenden Bilds, und folglich für jedes entsprechende Addierglied (Aj) der Additionsspalte, die Anzahl von abhängig von der Beleuchtung des entsprechenden Punkts (Iz) des zu erfassenden Bilds und abhängig von einer Schwelle des Addierglieds (Aj) durchzuführenden Additionen anzupassen, wobei die Anpassung Punkt für Punkt durchgeführt wird.

2. Sensor nach Anspruch 1, wobei jede Anpassungseinrichtung enthält:
• eine Einrichtung, um nacheinander für aufeinanderfolgende Addierglieder der Additionsspalte die Anzahl (Mj) von Additionen zu bestimmen, die ausgehend von der nacheinander vom ersten Pixel (P1) der Erfassungsspalte gespeicherten elektrischen Spannung und von der Schwelle des entsprechenden Addierglieds (Aj) durchzuführen sind, und
• eine Stoppeinrichtung, um für jedes Addierglied der Additionsspalte die Durchführung einer zusätzlichen Addition zu verhindern, wenn die Anzahl von durchzuführenden Additionen für das Addierglied erreicht ist.

3. Sensor nach Anspruch 2, wobei jede Anpassungseinrichtung ebenfalls eine Einrichtung enthält, um für jedes Addierglied der Additionsspalte die Anzahl von durchzuführenden Additionen zu speichern.

4. Sensor nach einem der Ansprüche 2 oder 3, der ebenfalls eine Einrichtung enthält, um die Anzahl von durchzuführenden Additionen an einen Ausgang des Sensors zu übertragen.

5. Sensor nach Anspruch 1, wobei jede Anpassungseinrichtung enthält:
• eine Einrichtung, um nach der Durchführung einer Addition zu bestimmen, ob die elektrische Spannung an den Anschlüssen eines Addierglieds (Aj) der Additionsspalte die Schwelle des Addierglieds (Aj) überschreitet, und
• eine Stoppeinrichtung, um für jedes Addierglied der Additionsspalte die Durchführung einer zusätzlichen Addition zu verhindern, wenn die elektrische Spannung an den Anschlüssen des Addierglieds die Schwelle des Addierglieds überschreitet.

6. Sensor nach Anspruch 5, der ebenfalls eine Einrichtung enthält, um die Anzahl von in einem Addierglied der Additionsspalte durchgeführten Additionen zu speichern.

7. Sensor nach einem der vorhergehenden Ansprüche, wobei jede Übertragungsvorrichtung enthält:
• einen Übertragungsbus (211),
• eine erste Reihe von Schaltern (SA1 bis SAM), wobei jeder Schalter der ersten Reihe von Schaltern zwischen einem Ausgang eines Pixels der Erfassungsspalte und dem Übertragungsbus verbunden ist,
• einen ersten Schaltersteuerkreis (310), der geeignet ist, um die Schalter der ersten Reihe von Schaltern so zu steuern, dass ein Pixel des Rangs i der Spalte von Pixeln mit dem Übertragungsbus verbunden wird, und die anderen Pixel der Spalte von Pixeln vom Übertragungsbus isoliert werden,
• einen ersten Inkrementiersteuerkreis (320), der geeignet ist, um den Rang i des mit dem Übertragungsbus zu verbindenden Pixels der Spalte von Pixeln zu inkrementieren,
• eine zweite Reihe von Schaltern (SB1 bis SBM), wobei jeder Schalter der zweiten Reihe von Schaltern zwischen dem Übertragungsbus und einem Addierglied der Additionsspalte verbunden ist,
• einen zweiten Schaltersteuerkreis (330), der geeignet ist, um die Schalter der zweiten Reihe von Schaltern so zu steuern, dass der Übertragungsbus mit einem Addierglied des Rangs j der Additionsspalte verbunden und der Übertragungsbus von den anderen Addiergliedern der Additionsspalte isoliert wird,
• einen zweiten Inkrementiersteuerkreis (340), der geeignet ist, um den Rang j des mit dem Übertragungsbus verbundenen Addierglieds zu inkrementieren,
• einen Anpassungskreis (350), um den Betrieb des zweiten Schaltersteuerkreises (330) zu verhindern, wenn für das Addierglied des Rangs j die Anzahl von durchzuführenden Additionen erreicht ist,
• einen ersten Wiederholsteuerkreis (360), der geeignet ist, um den ersten Schaltersteuerkreis, den zweiten Schaltersteuerkreis, den Anpassungskreis, den ersten Inkrementiersteuerkreis und den zweiten Inkrementiersteuerkreis wiederholt zu aktivieren,
• einen zweiten Wiederholsteuerkreis (370), der geeignet ist, um den ersten Inkrementierkreis wiederholt zu aktivieren, dann den ersten Wiederholsteuerkreis immer dann zu aktivieren, wenn der zweite Wiederholsteuerkreis aktiviert wird.

## Claims

1. Image sensor of the TDI type comprising
• N detection columns forming a detection matrix, each detection column comprising M photosensitive pixels (Pi), an image to be detected travelling past the detection matrix so that a point (Iz) of the image to be detected is detected at successive time periods by the M pixels of a detection column,
• N addition columns forming an addition matrix, each addition column comprising M adders (Aj), and
• N transfer devices, each transfer device being adapted for carrying out, at successive periods, additions of the electric voltages stored by successive pixels of one of the said detection columns corresponding to the same point (Iz) of the image to be detected in one and the same adder (Aj) of one of the said addition columns which is associated with the said detection column, the said electric voltages all being proportional to the illumination of the same point (Iz) of the image to be detected,
this sensor being **characterized in that** each transfer device comprises a means for adjusting, for each point (Iz) of the image to be detected, and therefore for each adder (Aj) of the corresponding addition column, the number of additions to be carried out as a function of the illumination of the corresponding point (Iz) of the image to be detected and as a function of a threshold of the said adder (Aj), the said adjustment being carried out point by point.

2. Sensor according to Claim 1, in which each adjustment means comprises:
• a means for successively determining, for the successive adders of the addition column, the number (Mj) of additions to be carried out on the basis of the electric voltage stored successively by the first pixel (P1) of the detection column and of the threshold of the corresponding adder (Aj), and
• a stopping means for preventing, for each adder of the addition column, the carrying out of a further addition when the number of additions to be carried out is reached for the said adder.

3. Sensor according to Claim 2, in which each adjustment means also comprises a means for storing, for each adder of the addition column, the number of additions to be carried out.

4. Sensor according to one of Claims 2 and 3, also comprising a means for transmitting the number of additions to be carried out to an output of the sensor.

5. Sensor according to Claim 1, in which each adjustment means comprises:
• a means for determining, after the carrying out of an addition, whether the electric voltage across the terminals of an adder (Aj) of the addition column exceeds the threshold of the said adder (Aj) and
• a stopping means for preventing, for each adder of the addition column, the carrying out of a further addition if the electric voltage across the terminals of the said adder exceeds the threshold of the said adder.

6. Sensor according to Claim 5, also comprising a means for storing the number of additions carried out in an adder of the addition column.

7. Sensor according to one of the preceding claims, in which each transfer device comprises:
• a transfer bus (211),
• a first series of breakers (SA1 to SAM), each breaker of the first series of breakers being linked between an output of a pixel of the detection column and the transfer bus,
• a first breaker control circuit (310) adapted for controlling the breakers of the first series of breakers so as to link a pixel of rank i of the column of pixels to the transfer bus and to isolate the other pixels of the column of pixels from the transfer bus,
• a first incrementation control circuit (320) adapted for incrementing the rank i of the pixel of the pixel column to be linked to the transfer bus,
• a second series of breakers (SB1 to SBM), each breaker of the second series of breakers being linked between the transfer bus and an adder of the addition column,
• a second breaker control circuit (330) adapted for controlling the breakers of the second series of breakers so as to link the transfer bus to an adder of rank j of the addition column and to isolate the transfer bus from the other adders of the addition column,
• a second incrementation control circuit (340) adapted for incrementing the rank j of the adder linked to the transfer bus,
• an adjustment circuit (350), for inhibiting the operation of the second breaker control circuit (330) if, for the adder of rank j, the number of additions to be carried out is reached,
• a first repetition control circuit (360) adapted for repetitively activating the first breaker control circuit, the second breaker control circuit, the adjustment circuit, the first incrementation control circuit and the second incrementation control circuit,
• a second repetition control circuit (370) adapted for repetitively activating the first incrementation circuit, and then activating the first repetition control circuit each time that the second repetition control circuit is activated.
